# EUROPEAN PATENT SPECIFICATION

(11) **EP 4 281 272 B1**
(45) Date of publication and mention of the grant of the patent: **04.12.2024**
(21) Application number: 22706663.6
(22) Date of filing: 23.01.2022
(51) Int. Cl.: B29C 59/00, B29C 59/02, B29C 64/30, B29C 71/00, B29D 12/02, B33Y 40/20, B29C 37/00, B29K 1/00, B29L 12/00, G02C 5/00

(54) **APPARATUS AND METHOD FOR IMPRINTING SURFACE PATTERN ON PRINTED POLYMERIC ARTICLES**
VORRICHTUNG UND VERFAHREN ZUM BEDRUCKEN VON GEDRUCKTEN KUNSTSTOFFGEGENSTÄNDEN MIT EINEM OBERFLÄCHENMUSTER
APPAREIL ET PROCÉDÉ POUR IMPRIMER UN MOTIF DE SURFACE SUR DES ARTICLES POLYMÈRES IMPRIMÉS

(30) Priority: 22.01.2021 IT 202100001139
(43) Date of publication of application: 29.11.2023
(73) Proprietor: 3DNextech S.R.L., 57123 Livorno (IT)
(72) Inventor: ARIENTI, Andrea, 57128 Livorno (IT); FOLLADOR, Maurizio, 100140 Givoletto (TO) (IT); NENCINI, Luca, 57128 Livorno (IT)
(74) Representative: Giraldi, Elisa
(86) International application number: PCT/IB2022/050572
(87) International publication number: WO 2022/157723

(56) References cited:
- GB-A- 883 222
- US-A1- 2011 217 544

## Description

### Technical field

The present invention generally relates to the field of plastics moulding and in particular of tridimensional printing (3D printing) or additive manufacturing technology. More particularly, the invention relates to an apparatus and a method for imprinting surface pattern on polymeric articles obtained by additive manufacturing.

### Background art

The conventional moulding technologies of plastics moulding, such as thermoforming, compression moulding, injection moulding and the like, make it possible to impart any desired appearance to the surfaces, or surface parts, of moulded components to meet aesthetical and/or functional needs by correspondingly shaping the die face facing the component to be moulded. In this way, it is possible to modify the surface structure of a moulded article by reproducing thereon, for example, embossed or hollow designs, writing, logos, and fancy or geometric repeating motifs. In the present description these modifications of the surface structure are generally indicated with the term "texture" and the repetition of composition of the textures is generally also indicated with term "pattern".

While often desirable, the same result cannot be achieved in the case of articles produced by additive manufacturing techniques (so-called 3D-printing) or FDM (Fused Deposition Modeling). Indeed, additive manufacturing techniques exhibit serious, inherent limits when surface patterns are to be imprinted on articles produced in this way.

A first problem lies in the maximum resolution limits which can be obtained in a FDM printing. This depends on the used printer, the nozzle size and the printing parameters. Even in the most favourable conditions it is impossible to impart surface pattern to the printed surfaces with details lower than 200 micron in the direction parallel to the layers, as this is the radius of the nozzle which the common 3D-printers are equipped of.

A second problem arises from the fact that the products coming out of a 3D printing process may present a variously rough, porous and inhomogeneous surface as a consequence of the way the part is formed by deposition of successive layers of material. These surface imperfections generally need to be removed and several techniques and equipment have been proposed for this purpose (see, for all, those described in WO2018/235121, on behalf of the same applicant, and WO2010/0002643 on behalf of Stratasys). With these techniques the surface of the objects at the end of the treatment is smooth, shiny and without imperfections. However, in some cases this result is not the desired one because, if on the one hand the removal of roughness and porosity is required, on the other hand not all the objects produced require a glossy surface (for example, in some cases a matt or satin surface is preferred) and moreover all the details that have the same size as the printing imperfections are inevitably removed during these treatments.

For example, there is a currently unsatisfied need to be able to imprint "three-dimensional" surface patterns (e.g. fabric-like or wood-like patterns, etc.) on eyeglass frames made of cellulose acetate. The main problem in this case is that classic embossing techniques can work on materials such as paper, metal, cloth, leather, but not on this polymer, which is not sufficiently deformable when cold, and degrades with temperature and therefore cannot be heated to temperatures high enough to soften the surface of the polymer.

These requirements, and similar difficulties and problems, are common to all situations in which very accurate details on the surface of items obtained by 3D printing are desired, details that, however, cannot be given by the printing and finishing process.

GB 883222 discloses a method of producing a plastic laminated article (e.g., an eyeglass frame) produced by injection moulding that involves bringing vapours of a suitable solvent into contact with at least part of its surface to produce a temporary softening thereof. After that, the article is placed in the mould of an injection moulding machine. Surface softening is performed to improve the bond between a fluid synthetic resin injected into the mould and the surface of the treated article.

US 2011/217544 discloses a method for incorporating additives in, for example, particle form into the surface of a polymeric article or on its coating that involves softening the surface of the article with a fluid solvent and partially or fully incorporating the additive particles into the surface of the article.

### Summary of the Invention

Accordingly, it is an object of the present invention to provide an apparatus and method whereby surface patterns can be created on articles, or parts of the surface of articles in polymeric materials, made by moulding and particularly by additive manufacturing techniques.

It is another object of the present invention to provide an apparatus and method of the above-mentioned type that can be configured for both manual or small batch production and fully automated, large batch, high capacity production.

A further object of the present invention is to provide an apparatus and method of the above-mentioned type having high manufacturing flexibility so that they can be used to create surface patterns even on articles of complex shapes.

A particular object of the present invention is to provide an apparatus and method of the above-mentioned type which enable surface patterns to be imprinted on articles, or parts thereof, made of cellulose acetate and produced by moulding and in particular by additive manufacturing techniques.

These objects are reached with the apparatus and the method for imprinting surface patterns on moulded polymer articles and in particular produced by additive manufacturing according to the present invention, the essential features of which are set forth in claims 1 and 15. Further important features are set forth in the dependent claims.

The idea underlying the present invention is to make a surface layer of the article to be treated temporarily soft, preferably a surface layer of controlled thickness, and then to bring the softened layer into contact with means suitable for generating the surface pattern by pressure, in particular by pressing on the surface a mould on which the pattern to be transferred to the piece is formed in negative.

According to an aspect of the invention, the apparatus for reproducing surface patterns on polymeric articles in particular produced by additive manufacturing includes a temporary surface softening station for said articles, wherein the vapours of a softening substance are kept in contact with the surface of the articles for a prefixed time, and a station for imprinting a pattern on the softened surface of said articles leaving the surface softening station, comprising means for transferring under pressure the pattern on their surface.

Preferably, the apparatus also comprises a station for the preparation and possible thermal conditioning of the articles upstream of the temporary softening station.

Preferably, the apparatus also comprises a drying station for the articles downstream of the pattern imprinting station.

Preferably the apparatus comprises conveyor means oriented according to a common advancement direction to transfer the articles from one station to the next.

Preferably, the means for pressure transferring the pattern of the pattern imprinting station comprise a press carrying a mould on which the pattern to be reproduced on the articles is formed in negative. In a variation the mould is a rigid mould. In another variation the mould is a flexible and soft mould

In another embodiment, the means for pressure transferring the pattern of the pattern imprinting station comprise means for generating a jet of very fine particles and at least one dispensing nozzle directed towards the articles, controlled so as to reproduce the desired pattern by impact of the very fine particles on the soft surface of the articles.

Preferably, supports are provided on which the articles are positioned, the supports being optionally provided with housings having a shape corresponding to that of the articles.

In a further aspect of the apparatus according to the invention, the station for surface softening of the articles is composed of several units in parallel in a sufficient number to compensate for the longer duration of the residence time in the softening station with respect to the residence time in the subsequent pattern imprinting station.

Preferably, the surface softening station comprises at least one hermetically sealed chamber operatively communicating with a management unit of a softening substance comprising a condensation and recovery unit of the softening substance and means for distributing the softening substance within the chamber.

According to another aspect of the present invention, a method is provided for reproducing a surface pattern on a polymeric article obtained by moulding and in particular by additive manufacturing, in which a surface layer of the article is softened by bringing it into contact with the vapours of a softening substance compatible with the material of the article and in which the softened surface of the article is brought into contact with means for pressure imprinting the pattern on the surface before its hardening, comprising means for transferring the pattern under pressure on the surface.

The apparatus and the method according to the present invention find a particularly advantageous application in the production of eyeglass frames in cellulose acetate, in which case the compatible softening substance used is acetone or methylethylketone.

### Brief description of the drawings

Further characteristics and advantages of the apparatus for imprinting surface patterns on polymer articles produced by mouldung and in particular produced by additive manufacturing will be apparent from the following, exemplifying and not limiting description of embodiments thereof made with reference to the attached drawings, in which:
Figure 1 is a diagrammatic view of the apparatus of the invention;
Figure 2 is a plan layout of an embodiment of the apparatus of the invention.

### Detailed description of the invention

As used herein the term "polymer articles" refers to any object made from a polymer that can be produced, *inter alia,* using additive manufacturing techniques. A non-exhaustive list of such polymers includes ABS (acrylonitrile-butadiene-styrene), PLA (polylactic acid), polyamides such as nylon, TPU (thermoplastic polyurethane), elastomeric materials, ASA (acrylonitrile-styrene-acrylate), polycarbonate, polypropylene, polyvinylidene fluoride, polyphenylene sulphide, polyetherketone, ethylene-propylene rubber, nitrile rubber, thermoplastic elastomers, polyetherimide, cellulose esters and others known to those skilled in the art.

As used herein, the term "softening substance" refers to any substance capable of mildly interacting with the polymer constituting the article to be subjected to pattern imprinting with the result of causing temporary softening of a layer on the surface of the article. or on part of the surface of the article.

For each polymer used, the person skilled in the art will be able to choose the most suitable compatible softening substance for the specific application, taking into account the most suitable operating conditions for the specific polymer used. A non-exhaustive list of such softening substances may include organic solvents such as alcohols (e.g., methanol, ethanol, isopropanol, n-propanol, isobutanol, butanol, neopentyl alcohol), ethers (e.g., diethylether, dimethyl ether, tetrahydrofuran, dioxane , propylene oxide), esters (e.g., methyl acetate, ethyl acetate, isopropyl acetate, benzyl benzoate, butyl acetate, isoamyl acetate), ketones (e.g., acetone, methylethyl ketone, methylbutyl ketone, cyclohexanone, isophorone, methyl isobutyl derivatives, diols and diol derivatives) 2-methoxyethanol, 2-ethoxyethanol), acids (for example, formic acid, acetic acid), other hydrocarbon solvents (for example, alkanes, alkenes, alkynes, benzene, methylbenzene, xylene, terpenes), halogenated hydrocarbons, or combinations and mixtures thereof.

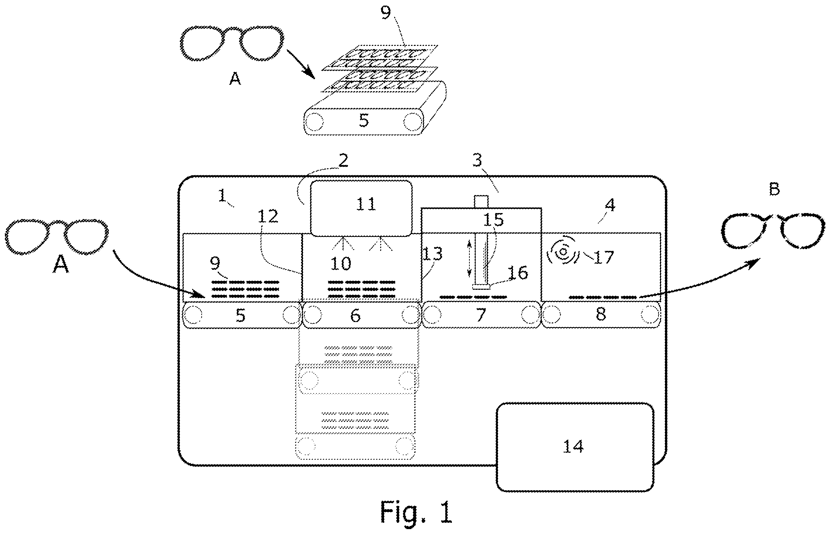

Figure 1 schematically shows the apparatus according to the present invention. In figure 1 the apparatus is configured as a production line or a real production plant capable of imprinting surface patterns on a considerable number of articles, thus featured by an even high production capacity. In figure 1, by way of example, the article on which a surface pattern must be reproduced is a spectacle frame made of cellulose acetate. A indicates a raw article coming, by way of example, from a 3D printing process, and therefore presenting surface imperfections. The article coming out of the apparatus according to the invention, on which the desired pattern has been imprinted, is indicated at B.

In the present embodiment of the invention the apparatus is configured in several stations 1, 2, 3 and 4 arranged in line, operationally communicating and crossed by conveyor means 5, 6, 7 and 8, in particular consisting of corresponding conveyor belts oriented along a common advancement direction X-X.

The articles to be imprinted are mounted on supports 9, and the supports are positioned on the conveyor means to be transported from one station to the next. Preferably, housings (not shown) having a shape corresponding to that of the articles to be subjected to the treatment are formed on supports 9.

In particular, the apparatus comprises a first station 1 for preparing the articles, in which the articles are mounted on supports 9 and then are positioned on the corresponding conveyor belt 5 and possibly conditioned, i.e. brought to the most suitable temperature for the next phase.

The apparatus also comprises a second station 2 for surface softening of the articles, in particular for the formation of a soft surface layer. The second station comprises a hermetic chamber 10 and a vapour generator 11 of a substance compatible with the polymeric material, i.e. capable of producing such surface softening when the vapour of the substance is brought into contact with the article surface. The compatible substance may be acetone or methylethylketone, when the polymer constituting the articles is cellulose acetate, as in the exemplified case of eyeglass frames, or ABS, PLA and other polymers suitable for use in 3D printing. Of course, different softening substances may be used depending on the material making up the moulded article, as is well known to those skilled in the art.

To achieve the necessary airtightness of chamber 10 and at the same time enable the entry and exit of the supports carrying the articles, chamber 10 is provided with hermetic doors 12 and 13, or bulkheads, upstream and downstream in the advancement direction X-X to isolate it from the first station 1 and from the next station. The hermetic doors 12 and 13 are automatically activated by a process controller, generally indicated at 14.

In the second station 2, the surface softening process adopted is that described in WO2018/235121, to which reference is made for the operational details. Basically, the vapours of the softening substance, i.e. acetone in the exemplary case, are kept in contact with the article to be treated for a prefixed time and at a predetermined temperature, in order to create the optimal conditions to promote vapour penetration into a surface layer of the article to a depth of a few hundred microns. The mixture between acetone vapour and the material making up the article has a glass transition temperature, Tg, sufficient to create a softened layer on the surface of the article. In such a layer the material acquires a limited fluidity, sufficient to remove any surface unevenness (roughness, porosity and the like) of the article resulting from the additive manufacturing process.

In the exemplified case of eyeglass frames made of cellulose acetate, the use of a solvent such as acetone in the apparatus and in the method according to the invention is particularly advantageous thanks to its volatility and low boiling temperature, allowing to operate at a temperature around 30°C, at which the cellulose acetate can be softened to the desired extent without risk of thermal degradation.

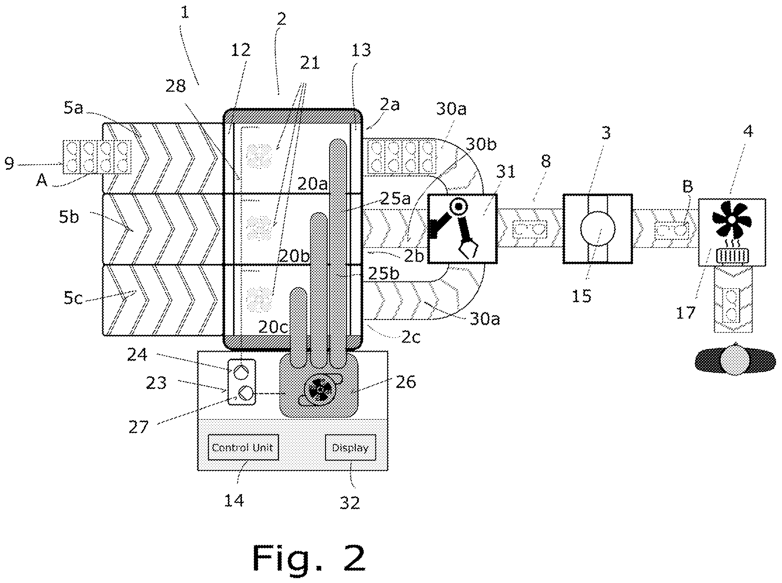

The treatment chamber 2 communicates with a station for managing the softening substance, generally indicated at 22 and described later with reference to Figure 2, for the condensation of the vapour and the recovery and recirculation of the softening substance.

The apparatus also comprises a third station 3 in which the desired pattern is impressed on the articles coming out of the second station 2. The third station comprises a press 15 carrying a die 16 on which the pattern to be imprinted on the articles is formed in negative. The articles passing through third station 3 are positioned in support 9 resting on the conveyor belt 7 and advance within guides, not shown, which ensure precise alignment under press 15. The conveyor belt runs on a plate constituting the abutment plane of the press, to ensure that the die can exert adequate pressure on the article to impress the pattern on the softened surface of the article. Of course, the die can be multiple, i.e. imprint a pattern on several articles in transit at the same time.

Finally, the apparatus according to the present invention comprises a fourth station 4 wherein the articles on which the pattern has been imprinted, coming from the third station 3, are dried with hot air supplied, for example, by means of a fan passing through an heating device, schematically indicated at 17. After a predetermined residence time in third station 3 sufficient to complete the drying of the article and restore the surface of the article to its original hardness, support 9 containing the treated articles, indicated at B, leaves the apparatus.

To obtain a softened surface layer of a thickness suitable for the subsequent pattern imprinting operation, a relatively long vapour exposure time is required, of the order of 20-60 minutes, so the residence time of the articles in the second station 2 is much longer than that required in the other stations of the apparatus. This involves a discontinuity in the flow of articles within the apparatus and may require an automated or manual phase for the passage of the articles from the surface softening station to the pattern imprinting station.

In an embodiment of the invention, a discontinuous flow can be kept wherein the pattern imprinting station 3 remains inactive up to the accomplishment of the softening operation performed in the second station 2 and starts operating once the supports containing the articles have been positioned under the press 15 manually, or by automatically transferring them from the second station 2 to the third station 3 using the respective conveyor belts 6 and 7.

In another embodiment of the invention, a plurality of second surface softening stations 2 can be provided in parallel in a sufficient number to compensate for the longer duration of the residence time in the second surface softening station 2 with respect to the residence time in the subsequent third pattern imprinting station 3. For example, if the residence time in the second station 2 is 20 minutes and the residence time in the third station is 5 minutes, 3 or 4 softening stations can be provided in parallel connected to the pattern imprinting station through corresponding conveyor means.

Figure 2 illustrates a schematic plan view of the apparatus according to the invention wherein, to balance the difference in duration of the softening and pattern imprinting phases on the article, the surface softening station 2 consists of three units 2a, 2b and 2c in parallel. The articles to be treated (in the exemplified case, spectacle frames A) are housed on supports 9 in the preparation station 1 and the supports are positioned, even stacked, on conveyor belts 5a, 5b and 5c for feeding to respective units 2a, 2b and 2c.

Each unit of the surface softening station 2 consists of a treatment chamber 20a, 20b and 20c equipped with heating means and an internal ventilation system 21. Each chamber is equipped with respective inlet and outlet sliding bulkheads 12 to hermetically seal the chamber during processing.

The three treatment chambers 20a, 20b and 20c communicate with a softening substance management station, generally indicated at 22, which comprises a tank of the substance 23 (acetone, in the exemplary case), a distribution pump 24 to supply the substance to each chamber through a distribution circuit 28, respective suction ducts 25a, 25b and 25c for the return of the vapour of the substance from the chambers to a substance condensation and recovery unit 26 and a pump 27 to return the recovered softening substance to tank 23.

The condensation of the softening substance can be advantageously carried out in thermoelectric modules (Peltier cells) associated to a heat sink. The modules can be located outside the area where the vapour passes, while the heat sink inside, so that the vapour may condense above the cooled heat sink. In an alternative configuration, the condenser can be a coil immersed in a cooling liquid.

Between the surface softening station 2 and the pattern imprinting station 3, a distribution station 29 is provided formed by three conveyor means 30a, 30b and 30c, in particular conveyor belts coming out of the units 2a, 2b and 2c of the station softening surface 2 and converging towards the pattern imprinting station 3. The articles on which the pattern has to be imprinted are individually fed to station 3 through the respective conveyor belt 7. To pick up the articles from their respective supports 9 and arrange them correctly on the belt conveyor 7, a robotic arm 31 is provided, of the Pick-and-Place type, or a functionally equivalent device.

The articles coming out from the printing station of the pattern 3 can be directly picked up by an operator, or directed to other conveyor belts for subsequent operations, for example sent to the drying station 4, if necessary.

In the pattern imprinting station 3, the die 16 can be carried by a conventional pneumatic or hydraulic press or, in an alternative configuration, by a pressure roller. In the case of an article having a flat or substantially flat shape, as in the case of a spectacle frame, it is sufficient to have a support 9 with housings having a shape corresponding to the articles to be positioned therein and adapted to discharge the force exerted by the press. In the case of articles of complex shape, the negative of the pattern to be imprinted on the articles is reproduced on a flexible and soft die. The die deforms when it is urged against the article arranged on a support 9 matching the article shape. In this case, the imprinting technique is equivalent to the well-known pad printing technique, which generally uses a silicone pad, with the difference that in the present case ink is not used, but advantage is taken of a transient softening of the article softening to imprint on it the pattern formed on the face of the pad. In any case, the die is made of a material compatible with the material constituting the articles to be treated and with the substance intended for the surface softening, as well as being suitable for withstanding the pressure necessary for the pattern imprinting on the article.

It may be necessary to use a release substance, such as that commonly used in silicone moulding, to prevent the softened article from adhering to the mould. The release agent is usually a liquid substance that is distributed with a spray or airbrush to forms a thin and removable film on the object on which die adhesion is to be avoided.

Actually, using the slow softening process of a surface layer of the article as described above, the surface is not sticky. In fact, the cooling due to the evaporation of the softening substance and the passage in ambient air towards the pattern imprinting station forms a film on its surface, while a soft layer of a few hundred microns remains below it. The soft layer takes several minutes to become solid again and can therefore be used to imprint a pattern even hundreds of microns deep, with a very low risk of the article sticking to the die.

In another embodiment of the invention, in the third station 3 the pattern imprinting can be achieved by means of a jet of very fine particles, wherein the impact of micro / millimetric objects leaves an imprint on the desired part of the surface of the article. For this purpose, the third station 3 comprises a device capable of generating a jet of particles and at least one dispensing nozzle directed towards the still soft surface of the articles positioned in the underlying support 9, as well as a particle recovery device.

The apparatus further comprises a process controller 14 which manages the advancement of the conveyor means 5, 6, 7 and 8, any thermal conditioning in the first station 1 of the articles to be treated, the pattern imprinting steps in the third station 3 and the management of the softener used, as well as an safety system for the apparatus. A display 32 is also provided, through which the operator can set the desired operation of the apparatus.

The method according to the invention was tested on a prototype of apparatus substantially like the one described above operating in a semi-continuous way. A 1m x 1m loading module, corresponding to support 9, was used on which 150 eyeglass frames (flat footprint 15x4cm) were placed, without temples, produced in cellulose acetate. The loading module with the frames was fed into the treatment chamber where it remained for about 20 minutes in an acetone vapour atmosphere at a temperature of 32 °C. Once the treatment time has elapsed, the module left the treatment station to enter the pattern imprinting station, equipped with a multiple die specially designed to imprint the pattern simultaneously on all the frames. The time spent in the impression station was 5 minutes. Finally, the module with the finished frames was placed in the drying station which was travelled slowly to ensure a residence time of about 20 minutes at a drying air temperature of 40 °C.

By means of a loading module of the same size it is possible to feed the system up to 300 temples alone or up to 32 complete and disassembled frames, i.e. with the temples detached from the respective frames intended to support the lenses.

From the foregoing it is clear that the apparatus and the method according to the present invention allows the prefixed objects and other purposes that can be deduced by the person skilled in the art to be achieved. In particular, the provision of a temporary surface softening of the articles allows for any type of surface pattern to be imprinted on them without deteriorating the article subjected to the treatment. Surface patterns may be created on surfaces of articles of even complex shape thanks to the use of means to imprint the pattern capable of adapting their shape to that of the surface. Articles made of polymeric materials that are difficult to work when cold and easily perishable when hot, such as for example cellulose acetate, can instead be easily worked with the apparatus and method according to the invention. Thanks to the possibility of obtaining their temporary surface softening at low temperature, the desired pattern can be created on the surface of the article without risk of thermal degradation of the polymer. Furthermore, even if in the present description reference has been made primarily to pieces or articles in polymeric material made by 3D printing, it will be appreciated that the method and the apparatus according to the invention can be advantageously used to imprint surface patterns on pieces and articles in polymeric material produced with another technique, for example by injection moulding. In this case, in fact, with a single mould that produces pieces and articles with a smooth surface, different types of finished products can be obtained, characterized by different surface patterns.

## Claims

1. An apparatus for forming surface patterns on polymer articles, in particular made by additive manufacturing, comprising:
- a temporary surface softening station (2) of said articles, wherein vapours of a polymer softening substance are kept in contact with the surface of said articles for a prefixed time; and
**characterized in that** it comprises
- a pattern imprinting station (3) for imprinting pattern on the softened surface of said articles leaving said temporary surface softening station (2) comprising means for pressure transferring said pattern on their surface.

2. Apparatus according to claim 1, further comprising an article preparing station and, optionally, article thermal conditioning station (1) upstream of said temporary surface softening station (2), and/or a
a drying station (4) downstream of said pattern imprinting station (3).

3. Apparatus according to any one of the previous claims, wherein conveying means (5, 6, 7, 8) are provided driven along a common advancing direction (X-X) to transfer said articles from one station to the next one.

4. Apparatus according to any one of the previous claims, wherein said means for pressure transferring said pattern of said pattern imprinting station (3) comprise a press (15) bearing a die (16) on which the negative pattern to be reproduced on said articles is formed, wherein said die (16) is a rigid die or a flexible and soft die.

5. Apparatus according to any one of claims 1 to 3, wherein said means for pressure transferring said pattern of said pattern imprinting station (3) comprise means for generating very fine particle jets and at least one dispensing nozzle directed towards said articles, controlled to form the desired pattern by impact of said very fine particles on the softened surface of said articles.

6. Apparatus according to any one of the previous claims, wherein said articles are arranged on supports (9), wherein said supports (9) are formed with housings having a shape corresponding to that of said articles.

7. Apparatus according to any one of the previous claims, wherein said temporary surface softening station (2) is composed by several units arranged in parallel in a number sufficient to balance the longer duration of the residence time in said station with respect to the residence time in the next pattern imprinting station (3).

8. Apparatus according to any one of the previous claims, wherein said temporary surface softening station (2) comprises at least a hermetically sealed chamber (20) operatively communicating with a softening substance managing unit (22) comprising a softening substance condensation and recovery unit (26) and means for dispensing (24, 28) said softening substance in said chamber (20).

9. Apparatus according to any one of the previous claims, wherein said polymer articles are eyeglass frames made of cellulose acetate.

10. Apparatus according to any one of the previous claims, wherein said softening substance is acetone or methylethylketone.

11. Method for forming surface patterns on a polymer article, in particular made by additive manufacturing, wherein a surface layer of said article is softened by contacting it with vapours of a softening substance compatible with the article material and **characterized in that** the softened surface of said article is contacted with means capable of pressure imprinting said pattern on said surface before hardening thereof.

12. Method according to claim 11, wherein said means capable of imprinting a pattern comprise a press and a die on which the negative pattern is formed, wherein said die is selected from a rigid die, a flexible and soft die or a pressure roller.

13. Method according to claim 11, wherein said pattern is imprinted by impact of very fine particles onto the softened surface, said very fine particles being generated in the form of jets directed towards said surface in a controlled way.

14. Method according to any one of claim 11 to 13, wherein said polymer article is an eyeglass frame made of cellulose acetate.

15. Method according to any one of claim 11 to 14, wherein said softening substance is acetone or methylethylketone.

## Patentansprüche

1. Vorrichtung zum Bilden von Oberflächenmustern auf Polymergegenständen, insbesondere durch additive Fertigung hergestellt, umfassend:
- eine vorübergehende Oberflächenerweichungsstation (2) für die Gegenstände, wobei Dämpfe einer Polymer-Weichmachersubstanz für eine vorgegebene Zeit in Kontakt mit der Oberfläche der Gegenstände gehalten werden; und
**dadurch gekennzeichnet, dass** sie umfasst
- eine Musterbedruckstation (3) zum Bedrucken der erweichten Oberfläche der Gegenstände, die die vorübergehende Oberflächenerweichungsstation (2) verlassen, mit einem Muster, die Mittel zur Druckübertragung des Musters auf deren Oberfläche umfasst.

2. Vorrichtung nach Anspruch 1, ferner umfassend eine Gegenstandsvorbereitungsstation und gegebenenfalls eine thermische Gegenstandskonditionierungsstation (1) stromaufwärts von der vorübergehenden Oberflächenerweichungsstation (2), und/oder eine Trocknungsstation (4) stromabwärts von der Musterbedruckstation (3).

3. Vorrichtung nach einem der vorhergehenden Ansprüche, wobei Fördermittel (5, 6, 7, 8) vorgesehen sind, die entlang einer gemeinsamen Vorschubrichtung (X-X) angetrieben werden, um die Gegenstände von einer Station zur nächsten zu überführen.

4. Vorrichtung nach einem der vorhergehenden Ansprüche, wobei die Mittel zur Druckübertragung des Musters der Musterbedruckstation (3) eine Presse (15) umfassen, die einen Stempel (16) trägt, auf dem das auf den Gegenständen zu reproduzierende Negativmuster gebildet ist, wobei der Stempel (16) ein starrer Stempel oder ein flexibler und weicher Stempel ist.

5. Vorrichtung nach einem der Ansprüche 1 bis 3, wobei die Mittel zur Druckübertragung des Musters der Musterbedruckstation (3) Mittel zur Erzeugung sehr feiner Partikelstrahlen und mindestens eine auf die Gegenstände gerichtete Abgabedüse umfassen, die gesteuert werden, um das gewünschte Muster durch Aufprall der sehr feinen Partikel auf der erweichten Oberfläche der Gegenstände zu bilden.

6. Vorrichtung nach einem der vorhergehenden Ansprüche, wobei die Gegenstände auf Trägern (9) angeordnet sind, wobei die Träger (9) mit Gehäusen gebildet sind, die eine den Gegenständen entsprechende Form aufweisen.

7. Vorrichtung nach einem der vorhergehenden Ansprüche, wobei die vorübergehende Oberflächenerweichungsstation (2) aus mehreren parallel angeordneten Einheiten besteht, deren Anzahl ausreicht, um die längere Dauer der Verweilzeit in der Station gegenüber der Verweilzeit in der nächsten Musterbedruckstation (3) auszugleichen.

8. Vorrichtung nach einem der vorhergehenden Ansprüche, wobei die vorübergehende Oberflächenerweichungsstation (2) mindestens eine hermetisch abgedichtete Kammer (20) umfasst, die in Wirkverbindung mit einer Weichmachersubstanzhandhabungsstation (22) steht, die eine Weichmachersubstanzkondensations- und -rückgewinnungseinheit (26) und Mittel zur Abgabe (24, 28) der Weichmachersubstanz in die Kammer (20) umfasst.

9. Vorrichtung nach einem der vorhergehenden Ansprüche, wobei die Polymergegenstände Brillengestelle aus Celluloseacetat sind.

10. Vorrichtung nach einem der vorhergehenden Ansprüche, wobei die Weichmachersubstanz Aceton oder Methylethylketon ist.

11. Verfahren zum Bilden von Oberflächenmustern auf einem Polymergegenstand, insbesondere durch additive Fertigung hergestellt, wobei eine Oberflächenschicht des Gegenstands durch Inkontaktbringen mit Dämpfen einer Weichmachersubstanz, die mit dem Gegenstandsmaterial kompatibel ist, erweicht wird, und **dadurch gekennzeichnet, dass** die erweichte Oberfläche des Gegenstand mit Mitteln in Kontakt gebracht wird, die in der Lage sind, die Oberfläche vor deren Aushärtung durch Druck mit einem Muster zu bedrucken.

12. Verfahren nach Anspruch 11, wobei die Mittel, die in der Lage sind, ein Muster aufzudrucken, eine Presse und einen Stempel umfassen, auf dem das Negativmuster gebildet ist, wobei der Stempel aus einem starren Stempel, einem flexiblen und weichen Stempel oder einer Druckwalze ausgewählt ist.

13. Verfahren nach Anspruch 11, wobei das Muster durch Aufprall von sehr feinen Partikeln auf der erweichten Oberfläche aufgedruckt wird, wobei die sehr feinen Partikel in der Form von Strahlen erzeugt werden, die kontrolliert auf die Oberfläche ausgerichtet werden.

14. Verfahren nach einem der Ansprüche 11 bis 13, wobei der Polymergegenstand ein Brillengestell aus Celluloseacetat ist.

15. Verfahren nach einem der Ansprüche 11 bis 14, wobei die Weichmachersubstanz Aceton oder Methylethylketon ist.

## Revendications

1. Appareil pour former des motifs de surface sur des articles en polymère, en particulier fabriqués par fabrication additive, comprenant :
- un poste temporaire de ramollissement de surface (2) desdits articles, dans lequel les vapeurs d'une substance de ramollissement de polymère sont maintenues en contact avec la surface desdits articles pendant une durée prédéterminée ; et
**caractérisé en ce qu'**il comprend
- un poste d'impression de motif (3) pour imprimer un motif sur la surface ramollie desdits articles quittant ledit poste temporaire de ramollissement de surface (2) comprenant des moyens pour transférer par pression ledit motif sur leur surface.

2. Appareil selon la revendication 1, comprenant en outre un poste de préparation d'articles et, éventuellement, un poste de conditionnement thermique d'articles (1) en amont dudit poste temporaire de ramollissement de surface (2), et/ou un
un poste de séchage (4) en aval dudit poste d'impression de motif (3).

3. Appareil selon l'une quelconque des revendications précédentes, dans lequel des moyens de transport (5, 6, 7, 8) sont prévus entraînés le long d'une direction d'avancement commune (X-X) pour transférer lesdits articles d'un poste au suivant.

4. Appareil selon l'une quelconque des revendications précédentes, dans lequel lesdits moyens pour transférer par pression ledit motif dudit poste d'impression de motif (3) comprennent une presse (15) portant une matrice (16) sur laquelle le motif négatif à reproduire sur lesdits articles est formé, dans lequel ladite matrice (16) est une matrice rigide ou une matrice souple et douce.

5. Appareil selon l'une quelconque des revendications 1 à 3, dans lequel lesdits moyens pour transférer par pression ledit motif dudit poste d'impression de motif (3) comprennent des moyens pour générer des jets de particules très fines et au moins une buse de distribution dirigée vers lesdits articles, commandés pour former le motif souhaité par impact desdites particules très fines sur la surface ramollie desdits articles.

6. Appareil selon l'une quelconque des revendications précédentes, dans lequel lesdits articles sont disposés sur des supports (9), dans lequel lesdits supports (9) sont formés avec des logements ayant une forme correspondant à celle desdits articles.

7. Appareil selon l'une quelconque des revendications précédentes, dans lequel ledit poste temporaire de ramollissement de surface (2) est composé de plusieurs unités disposées en parallèle en un nombre suffisant pour établir un équilibre entre la durée plus longue du temps de séjour dans ledit poste et le temps de séjour dans le poste d'impression de motif suivant (3).

8. Appareil selon l'une quelconque des revendications précédentes, dans lequel ledit poste temporaire de ramollissement de surface (2) comprend au moins une chambre hermétiquement fermée (20) communiquant fonctionnellement avec une unité de gestion de substance de ramollissement (22) comprenant une unité de condensation et de récupération de substance de ramollissement (26) et moyens de distribution (24, 28) de ladite substance de ramollissement dans ladite chambre (20).

9. Appareil selon l'une quelconque des revendications précédentes, dans lequel lesdits articles en polymère sont des montures de lunettes en acétate de cellulose.

10. Appareil selon l'une quelconque des revendications précédentes, dans lequel ladite substance de ramollissement est l'acétone ou la méthyléthylcétone.

11. Procédé pour former des motifs de surface sur un article en polymère, en particulier fabriqué par fabrication additive, dans lequel une couche de surface dudit article est ramollie en la mettant en contact avec des vapeurs d'une substance de ramollissement compatible avec le matériau de l'article et **caractérisé en ce que** la surface ramollie dudit article est mise en contact avec des moyens capables d'imprimer sous pression ledit motif sur ladite surface avant son durcissement.

12. Procédé selon la revendication 11, dans lequel lesdits moyens capables d'imprimer un motif comprennent une presse et une matrice sur laquelle le motif négatif est formé, dans lequel ladite matrice est sélectionnée parmi une matrice rigide, une matrice souple et douce ou un rouleau presseur.

13. Procédé selon la revendication 11, dans lequel ledit motif est imprimé par impact de particules très fines sur la surface ramollie, lesdites particules très fines étant générées sous la forme de jets dirigés vers ladite surface de manière contrôlée.

14. Procédé selon l'une quelconque des revendications 11 à 13, dans lequel ledit article en polymère est une monture de lunettes en acétate de cellulose.

15. Procédé selon l'une quelconque des revendications 11 à 14, dans lequel ladite substance de ramollissement est l'acétone ou la méthyléthylcétone.
